# EUROPEAN PATENT APPLICATION

(11) **EP 1 128 320 A1**
(43) Date of publication of application: **29.08.2001**
(21) Application number: 01102069.0
(22) Date of filing: 30.01.2001
(51) Int. Cl.: G06K 11/18, G06K 9/22

(54) **Electronic-form preparation system**

(30) Priority: 21.02.2000 JP 2000042200
(71) Applicant: Oki Data Corporation, Tokyo 108-8551 (JP)
(72) Inventor: Tsuji, Kenzo, c/o Oki Data Corporation, Tokyo 108-8551 (JP); Umehara, Akihiko, c/o Oki Data Corporation, Tokyo 108-8551 (JP)
(74) Representative: Kirschner, Klaus Dieter, Dipl.-Phys.

(57) **Abstract**

An electronic-form preparation system is disclosed. The system includes a coordinate-input device, and a data processor. The coordinate-input device includes an input pen having a writing member for handwriting characters into a form, and a transmitter provided in the vicinity of a tip of the writing member for emitting a signal when making entries into the form by the pen is started. The coordinate-input device further includes a plurality of receivers spaced from each other and receiving the signal emitted from the transmitter, and a signal processing circuit for determining coordinates of a series of points constituting a part of a locus of a character handwritten into the form by the pen on the basis of timing of reception of the signal by each of the receivers. The data processor generates data of an electronic form to be displayed on a display on the basis of the determined coordinates.

## Description

### FIELD OF THE INVENTION

The present invention relates to an electronic-form preparation system which recognizes characters handwritten into a form having a predetermined format to prepare a completed electronic form.

### BACKGROUND OF THE INVENTION

Conventionally, to prepare an "electronic form", an input device such as a keyboard or a mouse is used for entering characters directly, or an OCR (Optical Character Reader) is used for reading and recognizing characters handwritten into a paper form. It is also possible to read characters handwritten into a paper form by an image scanner and recognize them by software.

### OBJECT AND SUMMARY OF THE INVENTION

However, the above conventional ways for preparing an electronic form involve problems. For example, entering characters by a keyboard or the like takes much time and is likely to cause typographic errors. On the other hand, reading handwritten characters by an OCR or an image scanner is costly since they are expensive. Furthermore, when handwritten characters overlap with a ruled line or a box line, they can be misrecognized, or character-recognition itself can be impracticable. To eliminate the effect of ruled lines or the like, paper forms have to be printed using a dropout color, or the sizes and the patterns of boxes within a form have to be limited, which requires a great deal of time to prepare paper forms.

The present invention has been made to solve the above described problems with an object to provide, at a low cost, an electronic-form preparation system having, as a substitute for an OCR or an image scanner, a handwritten-character input device that makes the operation of inputting handwritten characters simple and easy.

This object is achieved by an electronic-form preparation system comprising a coordinate-input device and a data processor,
the coordinate-input device including:
an input pen including a writing member for handwriting characters into a form having a predetermined format, and a transmitter provided in the vicinity of a tip of the writing member for emitting a signal when making entries into the form by the input pen is started;
a plurality of receivers spaced from each other and receiving the signal emitted from the transmitter; and
a signal processing circuit for determining coordinates of a series of points constituting a part of a locus of a character handwritten into the form by the input pen on the basis of timing of reception of the signal by each of the receivers;
the data processor including an electronic-form data generating unit for generating data of an electronic form on the basis of the coordinates supplied from the coordinate-input device.

The data processor may further include character-recognition unit for recognizing the character handwritten into the form by the input pen on the basis of the coordinates supplied from the coordinate-input device.

The data processor may further include:
an identifying-character registration unit for registering identifying characters used for identifying form types,
a form-format registration unit for registering format for each of the form types; and
a form-type determining unit for determining a form type of the form by comparing an identifying character which has been entered into a predetermined area in the form by the input pen and identified by the character-recognition unit with the identifying characters registered in the identifying-character registration unit;
the character-recognition unit reading, from the form-format registration unit, a form-format of the electronic form corresponding to the form whose form type has been determined by the form-type determining unit, and recognizing characters entered into areas other than the predetermined area of the form on the basis of the form-format read from the form-format registration unit;
the electronic-form data generating unit generating data of the electronic form corresponding to the form whose form type has been determined by the form-type determining unit.

An identifying character may be printed beforehand in the form to identify a form type of the form.

In an embodiment of the electronic-form preparation system according to the invention,
the transmitter includes an ultrasonic oscillator for periodically emitting an ultrasonic wave of a pulse train having a predetermined number of ultrasonic pulses, and an electromagnetic wave emitter for periodically emitting an electromagnetic wave of a pulse train having a predetermined number of electromagnetic pulses;
the receivers include a first ultrasonic receiver disposed so as to be in contact with or adjacent to one end of a side of the form for receiving the ultrasonic wave emitted from the ultrasonic oscillator, a second ultrasonic receiver disposed so as to be in contact with or adjacent to the other end of the side of the form for receiving the ultrasonic wave emitted from the ultrasonic oscillator, and an electromagnetic wave receiver disposed between the first and second ultrasonic receivers for receiving the electromagnetic wave emitted from the electromagnetic wave emitter;
the coordinate-input device further includes a distance-determining unit for determining a first distance between the ultrasonic oscillator and the first ultrasonic receiver and a second distance between the ultrasonic oscillator and the second ultrasonic receiver, and
the signal processing circuit determines coordinates of a position of the ultrasonic oscillator on the basis of the first and second distances determined by the distance-determining unit and a distance between the first ultrasonic receiver and the second ultrasonic receiver by trigonometry.

In a variant of this embodiment of the electronic-form preparation system according to the invention,
the transmitter includes an ultrasonic oscillator for emitting an ultrasonic wave of a pulse train having a predetermined number of ultrasonic pulses,
the receivers include three or more ultrasonic receivers spaced from each other and receiving the ultrasonic wave emitted from the ultrasonic oscillator,
the coordinate-input device further includes a hyperbolic curve determining unit for determining, for each of two or more groups, each group including two ultrasonic receivers selected from the three or more ultrasonic receivers, a hyperbolic curve on which two associated ultrasonic receivers lie on the basis of timing of reception of the ultrasonic wave emitted from the ultrasonic oscillator by the two associated ultrasonic receivers, and
the signal processing circuit determines coordinates of a position of the ultrasonic oscillator from a point of intersection of two or more hyperbolic curves determined by the hyperbolic curve determining unit.

### BRIEF DESCRIPTION OF THE DRAWINGS

An embodiment of the invention will now be described by way of example and with reference to the accompanying drawings in which:
Fig. 1 is a schematic view showing a structure of an embodiment of an electronic-form preparation system according to the invention;
Fig. 2 is a top view of the coordinate-input device shown in Fig. 1;
Fig. 3 is a view explaining the principal of the coordinate-input device shown in Fig. 1;
Fig. 4 is a circuit diagram of the coordinate-input device shown in Figs. 1 and 2;
Fig. 5 is a time chart explaining the operation of the coordinate-input device;
Fig. 6 is a view explaining the operation of preparing an electronic form; and
Fig. 7 is a view showing another example of a form ID.

### DESCRIPTION OF THE PREFERRED EMBODIMENT

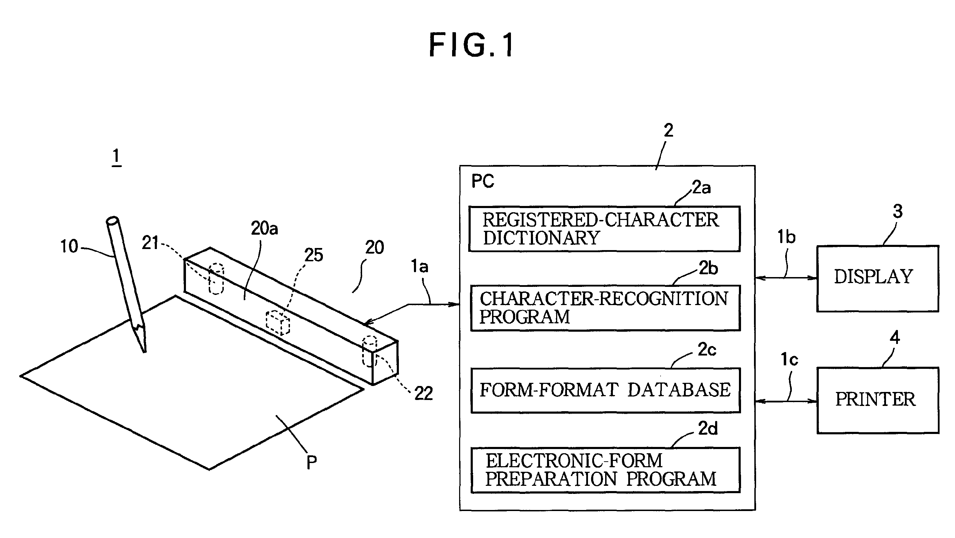

Fig. 1 schematically illustrates a structure of an embodiment of an electronic-form preparation system according to the invention. As shown in Fig. 1, this electronic-form preparation system includes a coordinate-input device 1, a PC (personal computer) 2, a display 3, and a printer 4. The coordinate-input device 1, the display 3, and the printer 4 are connected to the PC 2 through communication cables 1a, 1b, and 1c respectively.

The coordinate-input device 1 includes an input pen 10 for handwriting characters into a form P of a predetermined format, and a main unit 20 for capturing coordinates of a series of points constituting a part of a locus of the tip of the input pen 10 produced when a character is handwritten into the form P by the input pen 10. The input pen 10 is shaped like a pencil. The main unit 20 is in the shape of a rectangular parallelepiped as a whole. The form P and the main unit 20 are placed on a plane (not shown), for example, placed on a desktop. The form P is placed on the plane such that its topside comes into contact with or comes close to a side 20a of the main unit 20.

The main unit 20 of the coordinate-input device 1 captures coordinates of the input pen 10 at regular intervals from the moment at which the input pen 10 makes contact with the form P to the moment at which the input pen 10 separates from the form P. The state in which the input pen 10 is in contact with the form P is referred to as "pen-down state", and the state in which the input pen 10 is separate from the form P is referred to as "pen-up state" hereinafter. Furthermore, one action from a pen-down to a subsequent pen-up is referred to as a "pen-stroke" or a "stroke". Characters handwritten and input by the input pen 10 include not only alphanumeric characters, Chinese characters, kana or Japanese syllabaries, etc., but also symbols and diagrams.

The PC2 includes a character-recognition unit for recognizing characters written into the form P by the input pen 10 on the basis of coordinates supplied from the coordinate-input device 1, and an electronic-form preparation unit for preparing an electronic form using the characters recognized by the character-recognition unit. These units are realized by a registered-character dictionary 2a, a character-recognition program 2b, a form-format database 2c, and a electronic-form preparation program 2d.

The registered-character dictionary 2a stores characters coded on the basis of their specific loci (coordinates). The character-recognition program 2b produces a code of a character on the basis of the coordinates of the character supplied from the coordinate-input device 1, and recognize the character by comparing the code of this recognized character with codes stored in the registered-character dictionary 2a.

The form-format database 2c stores form-format data for various types of form having a specific format. The electronic-form preparation program 2d is for preparing an electronic form using the characters which have been recognized by the character-recognition program 2b. The form-format data include the number of boxes to be filled, size of each box, layout of the boxes, the number of characters allocated to each box, character type or font usable within each box, etc. The form-format data can be a bitmapped electronic form to enable supporting a form of a large size.

The form has a form ID (identification) printed on a predetermined area thereof to identify its form type. This enables entering a form ID without requiring the user to confirm a form ID of the form.

When the user traces the form ID in the form P with the input pen 10, the electronic-form preparation program 2d identifies the form type of the form P and reads form-format data of a corresponding electronic form from the form-format database 2c. The character-recognition program 2a utilizes this form-format data of the electronic form read from the form-format database 2c in recognizing characters entered into other boxes in the form P.

The electronic-form preparation program 2d displays an electronic form based on the form-format data which have been read from the form-format database 2c on the display 3, and also displays types (characters) corresponding to the characters handwritten into the form P by the input pen 10 in substantially real time. The printer 4 prints an image of the electronic form displayed on the display 3 as necessary.

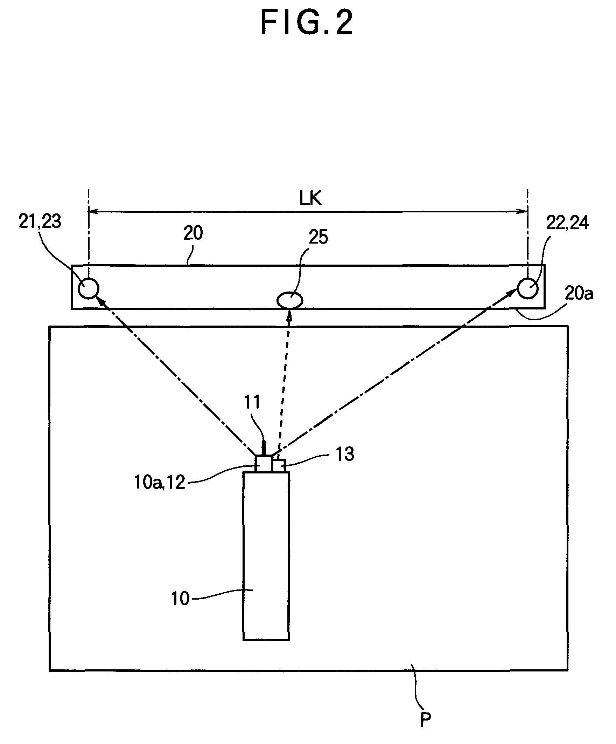

Fig. 2 is a top view of the coordinate-input device 1 shown in Fig. 1. As shown in Fig. 2, the input pen 10 has a writing member 11 such as a core of a ballpoint pen for actually writing characters into the form. The writing member 11 is not limited to a core of a ballpoint pen. Any writing member can be used if it is long-life and easy to replace. A sheet-type ultrasonic oscillator 12 of a polymeric material is wound onto the surface of a jacket 10a of the end portion of the input pen 10. An LED (light emitting diode) 13 is provided in the vicinity of the ultrasonic oscillator 12.

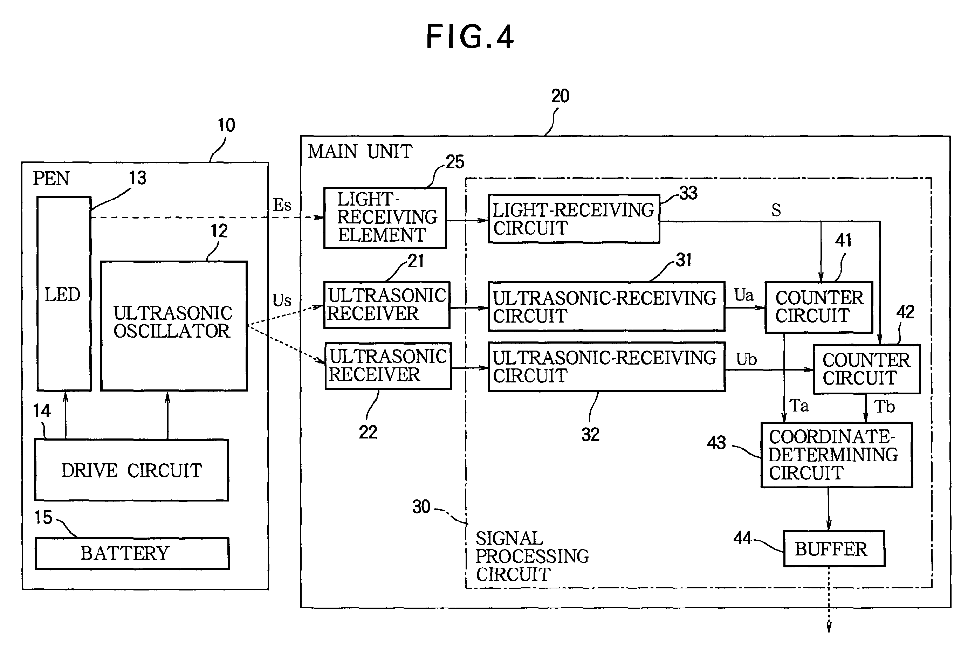

A drive circuit 14 for driving the ultrasonic oscillator 12 and the LED 13, and a battery 15 are included in the input pen 10 (Fig. 4). The input pen 10 has a switch (not shown) for detecting a pen-down state in which the tip of the writing member 11 is pressed downward to be in contact with an object such as the form P. The ultrasonic oscillator 12 and the LED 13 are driven by the drive circuit 14 while the pen-down state is detected by this switch.

The LED 13 emits a light signal Es of one pulse at regular intervals. The ultrasonic oscillator 12 emits an ultrasonic signal Us of a pulse train having two successive pulses in synchronization with the light signal Es.

As shown in Figs. 1 and 2, a cylindrical-shapedmember 23 is provided at one endportion of the main unit 20 so as to project therefrom vertically, and a sheet-type ultrasonic receiver 21 of a polymeric material is wound onto the side of the member 23. On the other hand, a cylindrical-shaped member 24 is provided at the other end portion of the main unit 20 so as to project therefrom vertically, and a sheet-type ultrasonic receiver 22 of a polymeric material is wound onto the side of the member 24. A light-receiving element 25 is provided at about the midpoint of the ultrasonic receivers 21 and 22.

The ultrasonic receiver 21 and the ultrasonic receiver 22 receive the ultrasonic signal Us emitted from the ultrasonic oscillator 12 of the input pen 10. The light-receiving element 25 receives the light signal Es emitted from the LED 13 of the input pen 10. A slit-like aperture (not shown) is formed in the side 20a of the main unit 20 so that the ultrasonic signal Us emitted from the ultrasonic oscillator 12 can be received by the ultrasonic receivers 21 and 22, and the optical signal Es emitted from the LED13 can be received by the light-receiving element 25.

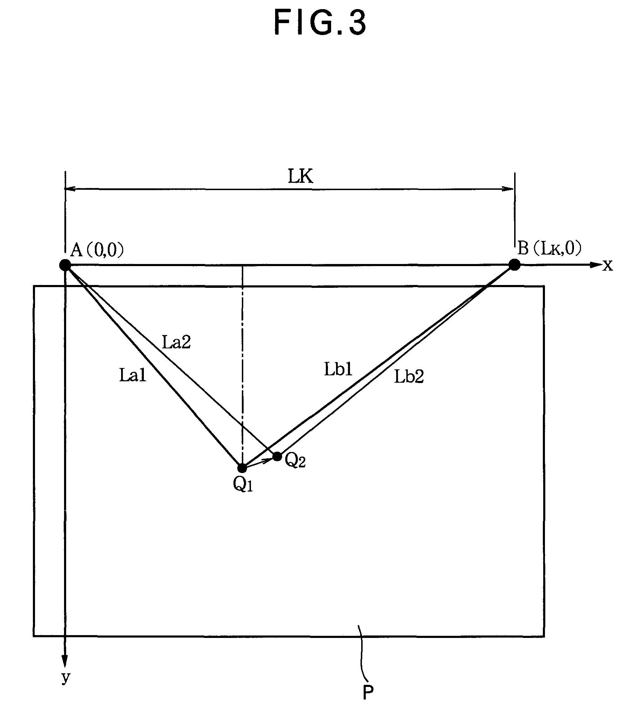

Fig. 3 is a view explaining the principal of the coordinate-input device. In Fig. 3, A(0, 0) represents the coordinates of the position of the ultrasonic receiver 21 of the main unit 20, and B (Lk, 0) represents the coordinates of the position of the ultrasonic receiver 22 of the main unit 20. The distance Lk between the ultrasonic receiver 21 and the ultrasonic receiver 22 is predetermined. Q1 and Q2 represent the positions of the ultrasonic oscillator 12 of the input pen 10. The straight line connecting the ultrasonic receiver 21 and the ultrasonic receiver 22 makes an x-axis on a plane including Q1 and Q2. The x-axis forms, in conjunction with a y-axis which passes through A(0, 0) and crosses the x-axis at right angles, an x-y rectangular coordinate system. A(0, 0) makes an origin point of this coordinate system.

When the input pen 10 is put on the point Q1 and the pen-down state is detected, the drive circuit 14 starts to drive the ultrasonic oscillator 12 and the LED13. The LED 13 emits the light signal Es of one pulse at regular intervals, and the ultrasonic oscillator 12 emits the ultrasonic signal Us of a pulse train having two successive pulses in synchronization with the light signal Es.

The light signal Es is received by the light-receiving element 25, and the ultrasonic signal Us is received by the ultrasonic receiver 21 and the ultrasonic receiver 22. The propagation speed of the ultrasonic signal Us is about 330m/sec, while the propagation speed of the light signal Es is the speed of light of about 3x10⁸m. Therefore, the propagation time of the light signal Es is negligible.

Accordingly, it is possible to determine the distance La1 between the ultrasonic receiver 21 and the ultrasonic oscillator 12, and the distance Lb1 between the ultrasonic receiver 22 and the ultrasonic oscillator 12, on the basis of the time elapsed between the reception of the light signal Es by the light-receiving element 25 and the reception of the ultrasonic signal Us by the ultrasonic receiver 21, and the time elapsed between the reception of the light signal Es by the light-receiving element 25 and the reception of the ultrasonic signal Us by the ultrasonic receiver 22. Thus, the position (coordinates) of the ultrasonic oscillator 12 or the position (coordinates) of the input pen 10 can be obtained from the distances Lk, La1 and La2 by trigonometry.

Fig. 4 is a circuit diagram of the coordinate-input device shown in Figs. 1 and 2. The main unit 20 includes a signal processor 30 which determines the coordinates of the input pen 10 on the basis of the light signal Es received by the light-receiving element 25 and the ultrasonic signal Us received by the ultrasonic receivers 21 and 22. The signal processor 30 includes ultrasonic-receiving circuits 31 and 32, a light-receiving circuit 33, counter circuits 41 and 42, a coordinate-determining circuit 43, and a data storage unit 44.

The ultrasonic-receiving circuit 31 outputs a delay signal Ua of a pulse train having two successive pulses in response to the reception of the ultrasonic signal Us of a pulse train having two successive pulses by the ultrasonic receiver 21. Likewise, the ultrasonic-receiving circuit 32 outputs a delay signal Ub of a pulse train having two successive pulses in response to the reception of the ultrasonic signal Us of a pulse train having two successive pulses by the ultrasonic receiver 22. The light-receiving circuit 33 outputs a start signal S in response to the reception of the light signal Es of one pulse by the light-receiving element 25.

The counter circuit 41 clocks a delay time Ta between receiving the start signal S from the light-receiving circuit 33 and receiving the delay signal Ua from the ultrasonic-receiving circuit 31. Likewise, the counter circuit 42 clocks a delay time Tb between receiving the start signal S from the light-receiving circuit 33 and receiving the delay signal Ub from the ultrasonic-receiving circuit 32.

The coordinate-value determining circuit 43 converts the delay time Ta clocked by the counter circuit 41 and the delay time Tb clocked by the counter circuit 42 into the distances La and Lb respectively, and determines the coordinate values of the ultrasonic oscillator 12, that is, the coordinate values of the input pen 10 from the distances Lk, La and Lb by trigonometry. The data storage unit 44 stores the coordinate values determined by the coordinate-value determining circuit 43 until they are transferred to the PC 2.

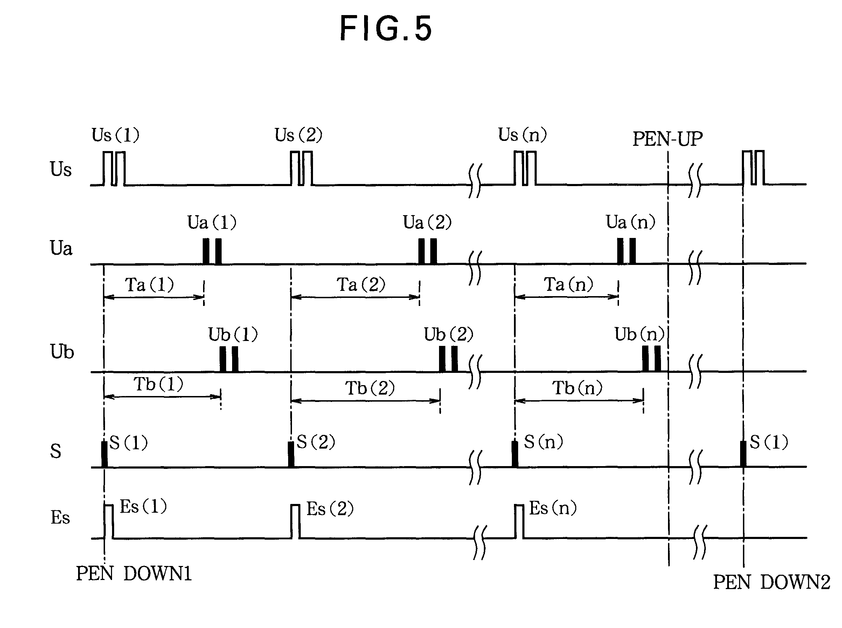

Fig. 5 is a time chart explaining the operation of the coordinate-input device. In Fig. 5, Es (1) represents a first light signal Es (a first pulse) emitted from the LED 13 after the pen-down state has been detected, and Es(2) represents a second light signal Es (a second pulse). Likewise, Us(1) represents a first ultrasonic signal Us (a first pulse train) emitted from the ultrasonic oscillator 12 after the pen-down state has been detected, and Us (2) represents a second ultrasonic signal Us (a second pulse train).

S(1) represents a first start signal S delivered from the light-receiving circuit 33 in response to the reception of the first light signal Es(1) by the light-receiving element 25. Ua(1) represents a first delay signal Ua delivered from the ultrasonic-receiving circuit 31 in response to the reception of the first ultrasonic signal Us(1) by the ultrasonic receiver 21, and Ta(1) represents a delay time Ta of the delay signal Ua(1) clocked by the counter circuit 41. Likewise, Ub(1) represents a first delay signal Ub delivered from the ultrasonic-receiving circuit 32 in response to the reception of the first ultrasonic signal Us(1) by the ultrasonic receiver 22 , and Tb(1) represents a delay time Tb of the delay signal Ub(1) clocked by the counter circuit 42.

When the writing member 11 of the input pen 10 is pressed downward to be in contact with the form P, and the pen-down state is detected by the not illustrated switch (PEN-DOWN 1 in Fig. 5), the driver circuit 14 starts to drive the ultrasonic oscillator 12 and the LED13. Then, the LED 13 emits the light signal Es(1) and the ultrasonic oscillator 12 emits the ultrasonic signal Us(1) at the same time.

The light signal Es (1) emitted from the LED 13 is received by the light-receiving element 25, and the start signal S(1) is delivered from the light-receiving circuit 33 in response to the reception of the light signal Es (1). The ultrasonic signal Us (1) emitted from the ultrasonic oscillator 12 is received by the ultrasonic receiver 21 and the ultrasonic receiver 22 respectively. Subsequently, the delay signal Ua (1) is delivered from the ultrasonic-receiving circuit 31 in response to the reception of the ultrasonic signal Us (1) by the ultrasonic receiver 21, and the delay signal Ub (1) is delivered from the ultrasonic-receiving circuit 32 in response to the reception of the ultrasonic signal Us (1) by the ultrasonic receiver 22.

Then, the counter circuit 41 clocks the delay time Ta(1) between receiving the start signal S(1) from the light-receiving circuit 33 and receiving the delay signal Ua(1) from the ultrasonic-receiving circuit 31, and the counter circuit 42 clocks the delay time Tb (1) between receiving the start signal S(1) from the light-receiving circuit 33 and receiving the delay signal Ub(1) from the ultrasonic-receiving circuit 32.

After the counter circuit 41 has clocked the delay time Ta(1) and the counter circuit 42 has clocked the delay time Tb(1), the coordinate-value determining circuit 43 converts these clocked delay times Ta(1) and Tb(1) into the distances La(1) and Lb(1) respectively, and determines the coordinate values of the input pen 10 (ultrasonic oscillator 12) from the distances Lk, La(1), Lb(1) by trigonometry. The coordinate values thus obtained are stored in the data storage unit 44.

The above-described operation for processing the light signal Es emitted from the LED 13 at regular intervals and the ultrasonic signal Us emitted from the ultrasonic oscillator 12 in synchronization with this light signal Es is repeated while the input pen 10 is in the pen-down state.

When the writing material 11 of the input pen 10 is separated from the form P and the pen-up state has been detected, the driver circuit 14 stops driving the LED 13 and the ultrasonic oscillator 12. As a result, the start signal S delivered from the light-receiving circuit 33 in response to the reception of the light signal Es by the light-receiving element 25 discontinues, and thereby an end of a pen-stroke canbe detected. The data indicative of the end of the pen-stroke is added to the last coordinate values to enable managing coordinate values in pen-stroke blocks.

When the writing member 11 of the input pen 10 is again pressed downward to be in contact with the form P, and the pen-down state is detected by the not illustrated switch (PEN-DOWN 2 in Fig. 5), the driver circuit 14 starts to drive the ultrasonic oscillator 12 and the LED13 to obtain coordinate values of the second pen-stroke following the first pen-stroke.

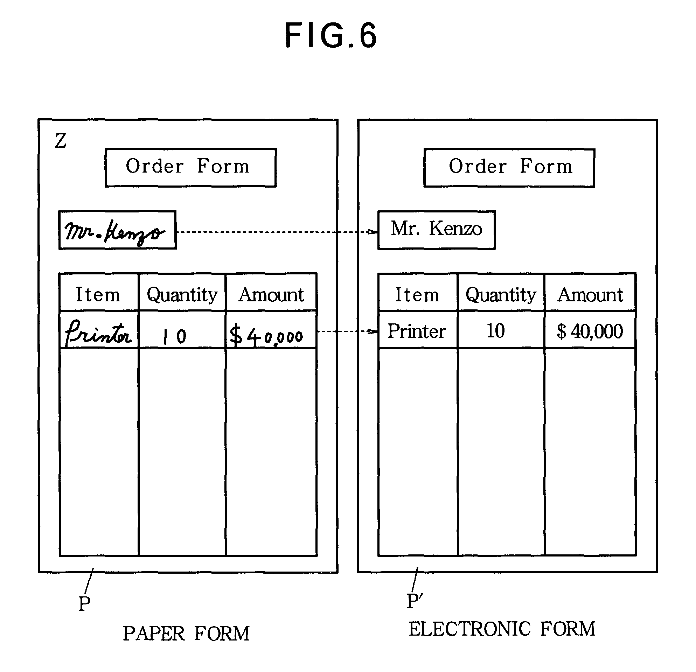

Fig. 6 is a view explaining the operation of preparing an electronic form. In Fig. 6, P represents a form into which characters are written by the input pen 10, and P' represents an electronic form reflecting the entries into the form P and displayed on the display 3 or print out by the printer 4.

The letter Z serving as an identification ID of the form P is printed beforehand at the upper left corner of the form P. When the letter Z in the form P is traced by the input pen 10, the main unit 20 can determine the coordinates of a series of points constituting a part of the locus of the letter Z. Next, "Mr. Kenzo", "Printer", "$4,000" are entered into boxes in the form P. The main unit 20 determines coordinates of a series of points constituting a part of each of these entered letters or characters. These determined coordinates are stored in the data storage unit 44 in pen-stroke blocks.

After all the boxes in the form P are filled, the coordinates stored in the data storage unit 44 are transferred to the PC2. The PC 2 runs the character-recognition program 2b and the electronic-form preparation program 2d to recognize the entered characters relying on their coordinates in pen-stroke blocks and to prepare the electronic form P'. It is also possible to transfer the coordinate values of the letter Z to the PC 2 as soon as the letter Z has been traced by the input pen 10 so that a form is displayed on the display 3 and a box to be filled next is indicated in real time. This makes it possible for the user to confirm the entries in real time, thereby eliminating the necessity for actually writing characters into the form P.

In this embodiment, character recognition is performed on an "on-line-character-recognition" basis. In the on-line-character-recognition, an entered character is recognized in substantially real time by extracting its locus as x-y coordinates and processing an extracted coordinate train. As described above, coordinate-extraction is performed by the coordinate-input device 1. With this on-line-character-recognition, it is possible to start character recognition at the instant when writing by the input pen 10 is started.

The code data of the first letter Z, which serves as a form ID, is produced on the basis of coordinates of each pen-stroke. This code data is compared with code data of each character stored in the registered-character dictionary 2a to recognize the letter Z.

To recognize the identifying letter Z, it is necessary to detect the position of the form with respect to the main unit 20. It can be done by placing the form so as to align with a reference line formed in the surface of the main unit 20, or by setting position data of the form to the main unit 20 by plotting the right and left sides of the form

Then, format data of the electronic form P' corresponding to the recognized letter Z is read from the form-format database 2c to specify the format of the electronic form P' by the number boxes, the size of each box, layout of the boxes, etc. included in this format data. Subsequently, the blank electronic form P' to be filled through the input pen 10 is displayed on the display 3.

Thereafter, characters within each box are recognized relying on the number of characters allocated to each box, character type or font usable within each box, etc. which are included in the format data. Thus, the electronic form P' displayed on the display 3 is filled with these recognized characters.

As described above, in this embodiment, the coordinate-input device 1 (main unit 20) determines the coordinates of the position of the input pen 10 (ultrasonic oscillator 12) when characters are written into the form P by this input pen 10. Then, the PC 2 runs the character-recognition program 2b to recognize the characters written into the form P on the basis of the coordinates captured by the coordinate-input device 1. Subsequently, the PC 2 runs the electronic-form preparation program 2d to prepare the completed electronic form P' filled with the recognized characters. Accordingly, it is possible to obtain the handwritten form P and the corresponding completed electronic form P' at once.

Furthermore, the coordinate-input device 1 can be constituted by the simple input pen 10 having the writing member 11, the ultrasonic oscillator 12 and the LED 13, and the simple main 20 unit having the ultrasonic receivers 21 and 22, the light-receiving element 25 and the signal processor 30. Accordingly, it is possible to manufacture the electronic-form preparation system according to the invention at a low cost. With this embodiment, it is possible to recognize handwritten characters and to prepare an electronic form without using an expensive OCR or image scanner.

In the case of using an OCR, characters written into a form have to be recognized at a later time, whereas, in this embodiment, they can be recognized in substantially real time. Furthermore with this embodiment, entering characters is easy since characters can be entered by handwriting them into a form by the input pen 10.

Moreover, ruled lines and boxes do not deteriorate a success rate in character recognition, unlike conventional systems using an OCR. Therefore, constraints in preparing paper forms are eased since they can be printed without using a dropout color.

Furthermore, printing a form ID on a paper form beforehand makes it possible to identify its form type and recognize characters which have been written into the boxes of the form relying on format data of a corresponding electronic form. For example, by restricting usable character types for each box for each form, and by performing processes on an idiom basis, etc., accuracy and speed of character recognition can be improved.

Although, the coordinate-input device 1 and the PC2 are interconnected by a communication cable in the above-described embodiment to prepare an electronic form, it is also possible to use the coordinate-input device 1 off-line.

For example, the user can carry only the coordinate-input device 1 with him, and capture coordinates of characters written into a form away from home in order to prepare an electronic form by connecting the coordinate-input device 1 to the PC 2 at a later time. In this case, a flexible disk or a magneto-optical disk can be used for transferring data from the coordinate-input device 1 to the PC 2. In the case of using the coordinate-input device 1 on-line, it is possible to transfer coordinates of several forms into the PC2 at once if real time character recognition is not required.

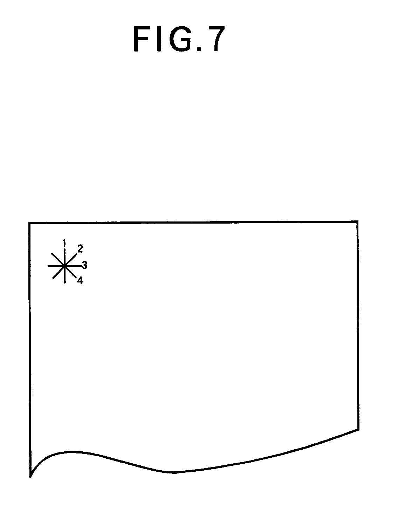

Although the letter Z is printed in a paper form beforehand as a form ID in the above-described embodiment, it is also possible to print four lines crossing each other in a paper form as shown in Fig. 7 to identify its form type by detecting the number of the lines traced and the tracing order. It is also possible to identify a form type by writing a form ID into a predetermined area of a paper form without printing a form ID beforehand. In this case, a specific box to filled in a form ID may be printed in the form.

Although the input pen 10 and the main unit 20 are not interconnected by a communication cable in the above-described embodiment, it is also possible to interconnect by a communication cable and arrange the coordinate-input device 1 such that the input pen 10 transmits a pen-down state and a pen-up state as synchronizing signals to the main unit 20.

The structure of the coordinate-input device 1 is not limited to the one described above. Any coordinate-input device capable of electronically capturing coordinates of a series of points constituting a part of the locus of a character handwritten by the input pen 10 can be used. For example, what is called a "3-ultrasonic type " coordinate-input device may be used.

The above explained preferred embodiments are exemplary of the invention of the present application which is described solely by the claims appended below. It should be understood that modifications of the preferred embodiments may be made as would occur to one of skill in the art.

## Claims

1. An electronic-form preparation system comprising a coordinate-input device (1) and a data processor (2),
said coordinate-input device (1) including:
an input pen (10) including a writing member (11) for handwriting characters into a form (P) having a predetermined format, and a transmitter (12, 13) provided in the vicinity of a tip of said writing member (11) for emitting a signal (Us, Es) when making entries into said form (P) by said input pen (10) is started;
a plurality of receivers (21, 22, 25) spaced from each other and receiving said signal (Us, Es) emitted from said transmitter (12, 13) ; and
a signal processing circuit (30) for determining coordinates of a series of points constituting a part of a locus of a character handwritten into said form (P) by said input pen (10) on the basis of timing of reception of said signal (Us, Es) by each of said receivers (21, 22, 25);
said data processor (2) including an electronic-form data generating unit (2d) for generating data of an electronic form (P') on the basis of said coordinates supplied from said coordinate-input device (1).

2. An electronic-form preparation system according to claim 1, in which said data processor (2) further includes character-recognition unit (2b) for recognizing said character handwritten into said form (P) by said input pen (10) on the basis of said coordinates supplied from said coordinate-input device (1).

3. An electronic-form preparation system according to claim 2, in which said data processor (2) further includes:
an identifying-character registration unit (2a) for registering identifying characters used for identifying form types,
a form-format registration unit (2c) for registering format for each of said form types; and
a form-type determining unit (2d) for determining a form type of said form (P) by comparing an identifying character which has been entered into a predetermined area in said form (P) by said input pen (10) and identified by said character-recognition unit (2b) with said identifying characters registered in said identifying-character registration unit (2a) ;
said character-recognition unit (2b) reading, from said form-format registration unit (2c), a form-format of said electronic form (P') corresponding to said form (P) whose form type has been determined by said form-type determining unit (2d), and recognizing characters entered into areas other than said predetermined area of said form (P) on the basis of said form-format read from said form-format registration unit (2c) ;
said electronic-form data generating unit (2d) generating data of said electronic form (P') corresponding to said form (P) whose form type has been determined by said form-type determining unit (2d).

4. An electronic-form preparation system according to claim 2, in which an identifying character is printed beforehand in said form (P) to identify a form type of said form (P).

5. An electronic-form preparation system according to claim 1,
said transmitter (12, 13) including an ultrasonic oscillator (12) for periodically emitting an ultrasonic wave (Us) of a pulse train having a predetermined number of ultrasonic pulses, and an electromagnetic wave emitter (13) for periodically emitting an electromagnetic wave of a pulse train having a predetermined number of electromagnetic pulses;
said receivers (21, 22, 25) including a first ultrasonic receiver (21) disposed so as to be in contact with or adjacent to one end of a side of said form (P) for receiving said ultrasonic wave (Us) emitted from said ultrasonic oscillator (12), a second ultrasonic receiver (22) disposed so as to be in contact with or adjacent to the other end of said side of said form (P) for receiving said ultrasonic wave (Us) emitted from said ultrasonic oscillator (12), and an electromagnetic wave receiver (25) disposed between said first and second ultrasonic receivers (21, 22) for receiving said electromagnetic wave (Es) emitted from said electromagnetic wave emitter (13) ;
said coordinate-input device (1) further including a distance-determining unit (30) for determining a first distance (La) between said ultrasonic oscillator (12) and said first ultrasonic receiver (21) and a second distance (Lb) between said ultrasonic oscillator (12) and said second ultrasonic receiver (22),
said signal processing circuit (30) determining coordinates of a position of said ultrasonic oscillator (12) on the basis of said first and second distances (La, Lb) determined by said distance-determining unit and a distance (Lk) between said first ultrasonic receiver (21) and said second ultrasonic receiver (22) by trigonometry.

6. An electronic-form preparation system according to claim 1,
said transmitter (12, 13) including an ultrasonic oscillator (12) for emitting an ultrasonic wave (Us) of a pulse train having a predetermined number of ultrasonic pulses,
said receivers (21, 22) including three or more ultrasonic receivers spaced from each other and receiving said ultrasonic wave (Us) emitted from said ultrasonic oscillator (12),
said coordinate-input device (1) further including a hyperbolic curve determining unit (30) for determining, for each of two or more groups, each group including two ultrasonic receivers selected from said three or more ultrasonic receivers, a hyperbolic curve on which two associated ultrasonic receivers lie on the basis of timing of reception of said ultrasonic wave (Us) emitted from said ultrasonic oscillator (12) by said two associated ultrasonic receivers,
said signal processing circuit (30) determining coordinates of a position of said ultrasonic oscillator (12) from a point of intersection of two or more hyperbolic curves determined by said hyperbolic curve determining unit.
